# EUROPÄISCHE PATENTSCHRIFT

(11) **EP 1 341 305 B1**
(45) Veröffentlichungstag und Bekanntmachung des Hinweises auf die Patenterteilung: **04.04.2007**
(21) Anmeldenummer: 03002789.0
(22) Anmeldetag: 07.02.2003
(51) Int. Cl.: H03K 17/945, H03K 17/965

(54) **Elektrisches Schaltgerät**
Electrical switch
Commutateur électrique

(30) Priorität: 28.02.2002 DE 20203214 U
(43) Veröffentlichungstag der Anmeldung: 03.09.2003
(73) Patentinhaber: Moeller GmbH, 53115 Bonn (DE)
(72) Erfinder: Boldin, Rudi, 52372 Kreuzau (DE); Högener, Hans-Jürgen, 53859 Niederkassel (DE)

(56) Entgegenhaltungen:
- EP-A- 0 339 983
- EP-A- 1 078 808
- WO-A-01/75344
- DE-A- 2 352 783
- DE-A- 3 233 936
- DE-A- 19 911 320
- FR-A- 1 344 963
- FR-A- 1 344 968
- FR-A- 2 081 173
- FR-A- 2 122 700
- US-A- 3 935 481
- US-A- 4 655 091
- US-A- 5 717 380
- BOCKSNICK B.: 'Grundlagen der Steuerungstechnik', 1987, FESTO DIDACTIC SENSORIK, Kapitel 2, Nachdruck 2003

## Beschreibung

Die vorliegende Erfindung betrifft ein elektrisches Schaltgerät, insbesondere Grenztaster zur Positionserfassung. Vorzugsweise dient das Gerät der Erfassung der Position von Gegenständen und/oder von Raumlagen.

Derartige Schaltgeräte sind bereits hinlänglich bekannt und finden vielfach Verwendung in der automatisierten Produktion der Industrie. Sie dienen hierbei der Umwandlung physikalischer Größen in elektrische Impulse. Beispielsweise werden auf automatisierten Transportbändern unterschiedlichste Gegenstände (Pakete oder produzierte Güter) an bestimmten Positionen des Transportbandes erfasst und aufgrund dieser Information "weiterverarbeitet".

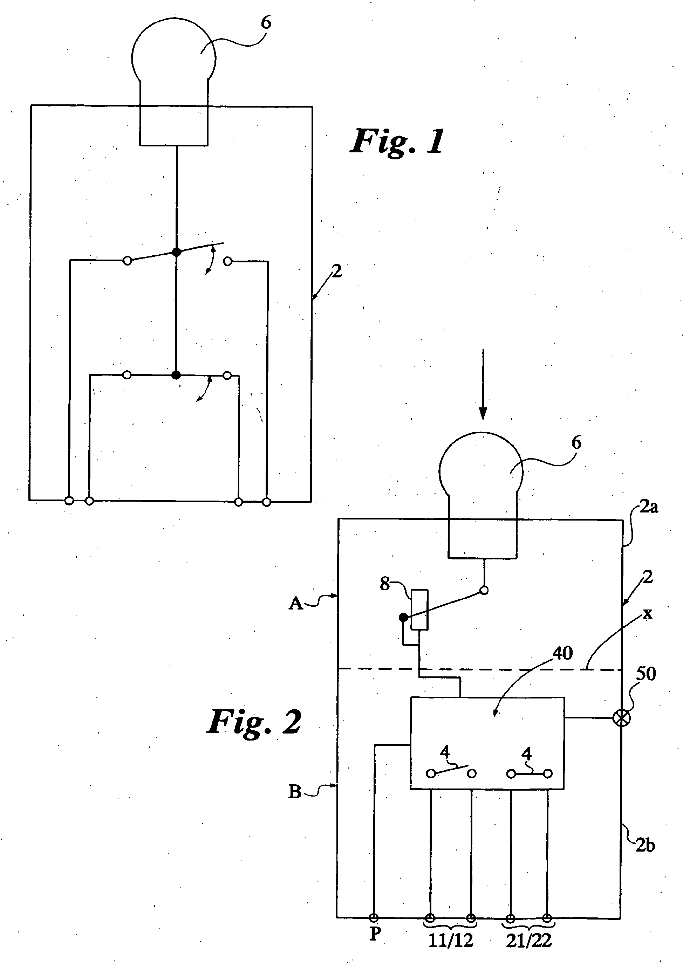

In der Produktinformation der Firma Klöckner-Moeller (Bonn) "Überwachen und melden: zuverlässig und sicher, Positionsschalter AT", Nr. W 13-7364, 4/1996 sind derartige Geräte bereits beschrieben. Die Grenztaster bestehen in der Regel aus einem Basisgerät, welches in einem Gehäuse mechanische Schaltkontakte (z.B. Paare oder Einzelkontakte von Öffnern und/oder Schließern) aufweist, sowie einem Betätigungselement zur unmittelbaren mechanischen Betätigung der Schaltkontakte. Das Betätigungselement wird beispielsweise durch einen stabförmigen, linearbeweglich im Gehäuse gelagerten und bereichsweise aus dem Gehäuse herausragenden Kuppenstößel gebildet (Figur 1 zeigt eine schematische Darstellung). Um die Basisgeräte möglichst vielfältig einsetzen zu können, können die Basisgeräte mit austauschbaren Antriebsköpfen versehen werden. So kann auf ein derartiges Basisgerät wahlweise ein Antriebskopf mit Schwenkhebel, Rollenhebel, Verstellrollenhebel oder Federstab oder dergleichen montiert werden. Auf diese Weise ist es möglich, ein und das gleiche Basisgerät, je nach verwendetem Antriebskopf für unterschiedliche Erfassungsarten (Gegenstand von links/rechts oder oben/unten kommend) zu verwenden.

Ferner ist aus der DE 199 11 320 A1 eine Schaltschranküberwachungseinrichtung umfassend eine Steuerungseinrichtung zum Überwachen von Schaltschrankfunktionen und zum Erzeugen von Überwachungssignalen bekannt. Die Überwachungseinrichtung umfasst weiter einen bekannten Türpositionsschalter, der im wesentlichen von seinem Aufbau dem des vorstehend beschriebenen Gerätes entspricht.

Es ist ein Befehlsgeber für die Erzeugung und Abgabe digitaler Signale bekannt (DE 23 52 783 A), bei dem ein Potentiometer verwendet wird. Die Befehlsabgabe kann durch Änderung der Auswertewiderstände für eine Logikschaltung stufenweise (elektromechanisch) verschoben werden. Als alternative Ausführung kann die Widerstandskette durch zwei Einzelpotentiometer ersetzt werden. Damit ist die Signalgabe während des Betriebs der Anlage stetig veränderbar.

Weiterhin ist eine Anordnung zur Positionserfassung bekannt, die einen veränderbaren Widerstand umfasst, dessen Stellgröße (Ausgangssignal) von einer Transistor-Schaltungsanordnung als Schaltsignal an Kontakte gegeben wird (FR-A-2 081 173).
Die Stellgröße wird nur für eine einzige Position des Betätigungselements über die Schaltungsanordnung zum Schalten der Kontakte weitergegeben. Der Nachteil der genannten Anordnung liegt darin, dass eine starre Zuordnung von Stellgröße (Ausgangssignal) und Schaltsignal vorhanden ist. Eine Änderung des Schaltpunkts ist nur durch Eingriff in die Hardware der Schaltungsanordnung möglich.

Beide vorgenannten Anordnungen dienen der Erfassung von Wegstrecken und/oder Positionen bei Maschinen. Häufig schaltende Maschinenteile, deren Positionen und/oder Wege erfasst werden sollen, unterliegen einem Verschleiß. Mit dem Verschleiß ändern sich die Schaltpunkte und verkürzt sich die Lebensdauer. Um Ausfallzeiten zu vermeiden, müssen Schaltpunkterfassungselemente schon präventiv frühzeitig ausgetauscht werden. Ein weiterer Nachteil besteht darin, dass in dem Fall, in dem man verschiedene Schaltpunkte eines Gerätetyps benötigt, das Gerät durch ein anderes ersetzt werden muss. Hierfür muss der Hersteller eine Vielzahl unterschiedlicher Geräte-Sondertypen bereitstellen.

Gemäß der Erfindung wird die Aufgabe durch die Merkmale des Anspruchs 1 gelöst. Hiernach ist der mindestens eine Schaltkontakt des Gerätes als elektronischer Schaltkontakt ausgebildet, der bevorzugt wiederum selbst Bestandteil einer elektronischen Logikeinheit ist. Der Schaltkontakt wird in Abhängigkeit vom Vorliegen eines elektrischen Schaltsignals geschaltet. Dieses Schaltsignal wird gemäß der Erfindung durch ein mit dem mechanischen Betätigungselement des Schaltgeräts wirkverbundenes Positionserfassungsmittel zur Positionserfassung des Betätigungselementes erzeugt. Das Schaltsignal wird eingangsseitig der Logikeinheit zugeführt und von dieser verarbeitet, so dass in Abhängigkeit von der Position des Betätigungselementes ein der jeweiligen Position entsprechender Signalwert erzeugt und somit in Abhängigkeit vom Erreichen eines vorgegebenen Signal-Schwellenwertes der Schaltkontakt schaltet.

Die Logikeinheit kann als kundenspezifisch programmierter Schaltkreis (ASIC: application specific integrated circuit) oder aber in Form eines programmierbaren Mikrocontrollers oder dergleichen ausgebildet sein. Mit Vorteil ist die Logikeinheit derart ausgebildet, dass unterschiedliche Schwellenwerte für die Schaltschwelle mindestens des einen Schaltkontaktes vorgebbar sind. Diese Schwellenwerte können dann als fest vorgegebene Werte in einer Speichertabelle der Logikeinheit hinterlegt und für den Anwender auswählbar sein oder aber als vom Anwender frei in ein hierfür vorgesehenes Programmfeld eingebbar sein. Auch ist denkbar, die Voreinstellung der Schwellenwerte statt dessen nur durch die Einstellung von Auswahlschaltern (z.B. sog. DIP- oder DIL-Schalter) vorzusehen.

Das Positionserfassungsmittel ist vorzugsweise als Potentiometer ausgebildet. Dieses ist mit dem Betätigungselement des Schaltgerätes wirkverbunden derart, dass bei Betätigung des Betätigungselementes das Potentiometer verstellt und damit sein Widerstandswert verändert wird. Hierdurch wird der Signalwert für die Logikeinheit erzeugt, so dass die Logikeinheit bei Erreichen des vorgegebenen Schwellenwertes veranlasst wird, den Schaltkontakt zu schalten. Selbstverständlich sind auch andere Erfassungsmittel wie Piezoelemente oder dergleichen verwendbar.

Die Häufigkeit der Schaltvorgänge verursacht mechanischen Verschleiß, so dass in Abhängigkeit von der Zahl der Schaltspiele die Lebensdauer abgeschätzt werden kann. Die Logikeinheit ist derart ausgebildet, dass die Anzahl der Schaltvorgänge und/oder die durch Verschleiß hervorgerufene zeitliche Schaltpunktverschiebung erfasst und in Abhängigkeit hiervon der Verschleiß bzw. die Restlebensdauer des Schaltgerätes ermittelt wird. Ferner ist mindestens ein Anzeigemittel zur Anzeige des Verschleißes bzw. der Restlebensdauer integriert. Alternativ oder zusätzlich kann eine Schnittstelle zur Informationsübertragung bezüglich der Restlebensdauer vorhanden sein.

Ein Schaltgerät nach dem Stand der Technik wird in Fig. 1 und eine Ausführungsform der Erfindung wird beispielhaft in Fig. 2 dargestellt.

Weitere Vorteile der Erfindung werden mit der Beschreibung der Fig. 2 erläutert. Die Figur 2 zeigt eine Ausführungsform in Form eines Grenztasters in schematischer Darstellung. Der dargestellte Grenztaster umfasst ein Gehäuse 2, zwei im Gehäuseinneren angeordnete Schaltkontakte 4, die als durch eine Logikeinheit 40 elektronisch angesteuerte Schaltkontakte ausgebildet sind, ein Betätigungselement 6 sowie ein Positionserfassungsmittel 8 zur Positionserfassung des Betätigungselementes 6. Gemäß der dargestellten Ausführungsform ist jeder elektronisch angesteuerte Schaltkontakt 4 als in die Logikeinheit 40 integrierter Schaltkontakt ausgebildet. Alternativ kann jeder Schaltkontakt 4 auch in Form eines durch die Logikeinheit 40 angesteuerten Relaiskontaktes eines separaten Reedrelais oder dergleichen ausgebildet sein. Das Positionserfassungsmittel 8 ist bevorzugt als Potentiometer ausgebildet. Die Funktionsweise des Grenztasters wird im folgenden kurz beschrieben.

Wird das Betätigungselement 6 in Pfeilrichtung betätigt, wird hierdurch der Widerstandswert des Potentiometers in eine Richtung (Widerstandswert steigend oder fallend) verändert. Hierdurch wird ein elektrischer Signalwert (z.B. eine bestimmte Spannung oder ein bestimmter Strom) erzeugt und der Logikeinheit 40 zugeführt. Innerhalb der Logikeinheit 40 wird der Signalwert mit einem vorgegebenen Schwellenwert verglichen, so dass bei Erreichen der vorgegebenen Signalschwelle einer der Schaltkontakte 4 geschaltet wird. Jeder Schaltkontakt 4 ist über Anschlussstellen 11/12; 21/22 am Schaltgerät abgreifbar bzw. über Leitungen anschließbar.

In einer bevorzugten Ausführungsform ist der Schwellenwerte für jeden Schaltkontakt 4 durch den Anwender vorgebbar. Hierfür ist die Logikeinheit 40 entweder programmierbar ausgebildet, so dass aus einer Auswahl fest vorgegebener Schwellenwerte ausgewählt werden kann oder dass der Anwender frei wählbar und programmierbar einen gewünschten Schwellenwert eingeben kann. In einer einfachen Ausführung kann in der Logikeinheit 40 n mal verschiedene Schwellenwerte fest hinterlegt werden und der Anwender kann über einen separaten Leitungsanschluss P einen der Schwellenwerte auswählen. Der ausgewählte Wert kann z.B. über LEDs 50, eine Mehrfarb-LED oder andere Mittel zur Anzeige gebracht werden.

Die Logikeinheit enthält Mittel zur Erfassung der Anzahl der Schaltvorgänge und/oder des jeweiligen Schaltpunktes, so dass durch Zählen der Schaltspiele und/oder die Erfassung der zeitlichen Schaltpunktverschiebung des Schaltkontaktes 4 und deren anschließende Auswertung die Restlebensdauer bzw. der Verschleißzustand des Schaltgerätes ermittelbar ist. Für die Anzeige würden sich ebenfalls Anzeigemittel in Form von LED's oder dergleichen anbieten. Bevorzugt ist die Einstellung der Schwellenwerte, deren Anzeige sowie die Anzeige der Restlebensdauer auch über eine oder einzelne Schnittstelle(n) möglich.

In einer weiteren Ausführungsform ist vorgesehen, dass Schaltgerät zweiteilig auszubilden. Hierbei besteht das Schaltgerät aus zwei miteinander elektrisch und mechanisch verbindbaren Modulen A, B, wobei das erste Modul A ein separates Gehäuseteil 2a sowie das darin gelagerte Betätigungselement 6 und das damit wirkverbundene Positionserfassungsmittel 8 umfasst und wobei das zweite Modul B ein separates Gehäuseteil 2b sowie die Logikeinheit 40 nebst der integrierten Schaltkontakte 4 umfasst. Auf diese Weise ist ein einheitliches Basismodul B denkbar, welches mit unterschiedlichen Kopfmodulen (Modul A) kombinierbar ist. Die modulare Aufteilung ist in Figur 2 durch die gestrichelte Linie X angedeutet.

## Patentansprüche

1. Elektrisches Schaltgerät zur Erfassung von Positionen und/oder Lagen von Gegenständen umfassend
- ein Gehäuse (2; 2a, 2b),
- ein mechanisches Betätigungselement (6) und
- mindestens ein im Inneren des Gehäuses (2; 2a, 2b) angeordneter elektrischen Schaltkontakt (4),
wobei
- mit dem Betätigungselement (6) ein im Inneren des Gehäuses (2; 2a, 2b) angeordnetes Positionserfassungsmittel (8) zur ausgangsseitigen Erzeugung eines der Position des Betätigungselements (6) entsprechenden elektrischen Signals wirkverbunden ist und
- das Positionserfassungsmittel (8) ausgangsseitig mit einer im Inneren des Gehäuses (2; 2a, 2b) angeordnete, programmierbare Logikeinheit (40) zur in Abhängigkeit vom Ausgangssignal des Positionserfassungsmittels (8) elektrischen Ansteuerung des mindestens einen Schaltkontakts (4) verbunden ist, und
- das elektrische Ausgangssignal des Positionserfassungsmittels (8) der Logikeinheit zugeführt und derart in der Logikeinheit (40) verarbeitet wird, dass in Abhängigkeit vom Ausgangssignal und durch Vergleichen mit mindestens einer in der Logikeinheit (40) hinterlegten Schaltschwelle der mindestens eine Schaltkontakt (4) veranlasst wird, zu schalten,
- und die Logikeinheit (40) Mittel zur Erfassung der Anzahl der Schaltvorgänge enthält, deren Auswertung eine verbleibende Restlebensdauer liefert.

2. Schaltgerät nach Anspruch 1, **dadurch gekennzeichnet, dass** die Logikeinheit (40) Mittel zur Erfassung einer durch Verschleiß hervorgerufenen zeitlichen Schaltpunktverschiebung enthält, deren Auswertung eine verbleibende Restiebensdauer liefert.

3. Schaltgerät nach Anspruch 1 oder 2, **dadurch gekennzeichnet, dass** der mindestens eine Schaltkontakt (4) als elektronischer in die Logikeinheit (40) integrierter Schaltkontakt ausgebildet ist.

4. Schaltgerät nach Anspruch 1 oder 2, **dadurch gekennzeichnet, dass** der mindestens eine Schaltkontakt (4) als Kontakt eines separaten, durch die Logikeinheit (40) angesteuerten Relais ausgebildet ist.

5. Schaltgerät nach einem der vorherigen Ansprüche, **dadurch gekennzeichnet, dass** das Positionserfassungsmittel (8) als veränderbarer ohmscher Widerstand (8), insbesondere als Potentiometer oder Piezoelement ausgebildet ist.

6. Schaltgerät nach einem der vorherigen Ansprüche, **dadurch gekennzeichnet, dass** das Schaltgerät mindestens ein Anzeigemittel (50) für die Restlebensdauer des Schaltgerätes aufweist.

7. Schaltgerät nach einem der vorherigen Ansprüche, **dadurch gekennzeichnet, dass** das Schaltgerät Mittel (P) zur Eingabe und Hinterlegung eines Schwellenwertes für die Logikeinheit (40) aufweist derart, dass hierdurch definierte Schaltpunkte jedes Schaltkontaktes (4) vorgebbar sind.

8. Schaltgerät nach einem der vorherigen Ansprüche, **dadurch gekennzeichnet, dass** das Schaltgerät aus zwei miteinander elektrisch und mechanisch verbindbaren Modulen (A, B) besteht, wobei das erste Modul (A) ein separates Gehäuseteil (2a), sowie das darin gelagerte Betätigungselement (6) und das damit wirkverbundene Positionserfassungsmittel (8) umfasst und wobei das zweite Modul (B) ein separates Gehäuseteil (2b), sowie die Logikeinheit (40) nebst mindestens einem Schaltkontakt (4) umfasst.

## Claims

1. Electrical switching device for detecting positions and/or locations of objects, comprising
a housing (2; 2a, 2b),
a mechanical actuating element (6) and
at least one electrical switching contact (4) arranged inside the housing (2; 2a, 2b),
wherein
a position detecting means (8) arranged inside the housing (2; 2a, 2b) for output-side generation of an electrical signal corresponding to the position of the actuating element (6) is operatively connected to the actuating element (6) and
the position detecting means (8) is connected on the output side to a programmable logic unit (40) arranged inside the housing (2; 2a, 2b) for electrical triggering of the at least one switching contact (4) as a function of the output signal of the position detecting means (8), and
the electrical output signal of the position detecting means (8) is fed to the logic unit and processed in the logic unit (40) in such a way that, as a function of the output signal and by comparison with at least one switching threshold stored in the logic unit (40), the at least one switching contact (4) is caused to switch,
and the logic unit (40) contains means for detecting the number of switching processes, evaluation of which yields a remaining residual life.

2. A switching device according to claim 1, **characterised in that** the logic unit (40) contains means for detecting a switching point time shift caused by wear, evaluation of which shift yields a remaining residual life.

3. A switching device according to claim 1 or claim 2, **characterised in that** the at least one switching contact (4) takes the form of an electronic switching contact incorporated into the logic unit (40).

4. A switching device according to claim 1 or claim 2, **characterised in that** the at least one switching contact (4) takes the form of a contact of a separate relay triggered by the logic unit (40).

5. A switching device according to any one of the preceding claims, **characterised in that** the position detecting means (8) takes the form of a variable ohmic resistor (8), in particular of a potentiometer or piezo element.

6. A switching device according to any one of the preceding claims, **characterised in that** the switching device comprises at least one display means (50) for the residual life of the switching device.

7. A switching device according to any one of the preceding claims, **characterised in that** the switching device comprises means (P) for inputting and storing a threshold value for the logic unit (40), in such a way that switching points defined thereby of each switching contact (4) may be predetermined.

8. A switching device according to any one of the preceding claims, **characterised in that** the switching device consists of two modules (A, B) capable of being connected together electrically and mechanically, the first module (A) comprising a separate housing part (2a), together with the actuating element (6) mounted in said housing part and the position detecting means (8) operatively connected to said actuating element, and the second module (B) comprising a separate housing part (2b), together with the logic unit (40) plus at least one switching contact (4).

## Revendications

1. Dispositif de commutation électrique pour détecter les positions et/ou les emplacements d'objets, comprenant
un boîtier (2; 2a; 2b);
un élément d'actionnement mécanique (6); et
au moins un contact de commutation électrique (4) agencé dans l'intérieur du boîtier (2; 2a, 2b);
dans lequel
un moyen de détection de la position (8), agencé à l'intérieur du boîtier (2; 2a, 2b) est relié à l'élément d'actionnement (6) de manière opérationnelle pour émettre sur le côté de sortie un signal électrique correspondant à la position de l'élément d'actionnement (6); et
le moyen de détection de la position (8) est relié sur le côté de sortie avec une unité logique programmable (40) agencée à l'intérieur du boîtier (2; 2a; 2b) pour assurer la commande électrique du au moins un contact de commutation (4), en fonction du signal de sortie du moyen de détection de la position (8); et
le signal de sortie électrique du moyen de détection de la position (8) est transmis vers l'unité logique et traité dans l'unité logique (40) de sorte à entraîner la commutation du au moins un contact de commutation (4), en fonction du signal de sortie et par comparaison avec au moins un seuil de commutation enregistré dans l'unité logique (40);
l'unité logique (40) comportant des moyens pour détecter le nombre de processus de commutation, dont l'évaluation indique une durée de vie résiduelle restante.

2. Dispositif de commutation selon la revendication 1, **caractérisé en ce que** l'unité logique (40) contient des moyens de détection d'un décalage du point de commutation dans le temps, entraîné par l'usure, dont l'évaluation indique une durée de vie résiduelle restante.

3. Dispositif de commutation selon les revendications 1 ou 2, **caractérisé en ce que** l'au moins un contact de commutation (4) est constitué par un contact de commutation électronique intégré dans l'unité logique (40).

4. Dispositif de commutation selon les revendications 1 ou 2, **caractérisé en ce que** l'au moins un contact de commutation (4) est constitué par un contact d'un relais séparé (40) commandé par l'unité logique (40).

5. Dispositif de commutation selon l'une des revendications précédentes, **caractérisé en ce que** le moyen de détection de la position (8) est constitué par une résistance ohmique modifiable (8), en particulier un potentiomètre ou un élément piézoélectrique.

6. Dispositif de commutation selon l'une des revendications précédentes, **caractérisé en ce que** le dispositif de commutation comprend au moins un moyen indicateur (50) de la durée de vie résiduelle du dispositif de commutation.

7. Dispositif de commutation selon l'une des revendications précédentes, **caractérisé en ce que** le dispositif de commutation (P) comprend des moyens (P) servant à entrer et à enregistrer une valeur de seuil de l'unité logique (40), permettant de prédéterminer des points de commutation définis de chaque contact de commutation (4).

8. Dispositif de commutation selon l'une des revendications précédentes, **caractérisé en ce que** le dispositif de commutation comprend deux modules (A, B) pouvant être reliés de manière électrique et mécanique, le premier module (A) comprenant une partie de boîtier séparée (2a), ainsi que l'élément d'actionnement (6) qui y est agencé et l'élément de détection de la position (8) associé de manière opérationnelle, le deuxième module (B) comprenant une partie de boîtier séparée (2b) ainsi que l'unité logique (40) et au moins un contact de commutation (4).
